# EUROPEAN PATENT SPECIFICATION

(11) **EP 1 097 048 B1**
(45) Date of publication and mention of the grant of the patent: **02.01.2003**
(21) Application number: 98935626.6
(22) Date of filing: 10.07.1998
(51) Int. Cl.: B60C 17/00, B60C 9/20, B60C 9/08

(54) **TREAD REINFORCEMENT MEANS FOR EXTENDED MOBILITY TIRE**
LAUFFLÄCHENVERSTÄRKUNGSMITTEL FÜR NOTLAUFREIFEN
MOYEN DE RENFORCEMENT DE LA BANDE DE ROULEMENT POUR PNEUMATIQUE A MOBILITE ACCRUE

(43) Date of publication of application: 09.05.2001
(73) Proprietor: THE GOODYEAR TIRE & RUBBER COMPANY, Akron, Ohio 44316-0001 (US)
(72) Inventor: CLOSE, Roland, B-4790 Burg-Reuland (BE); VERBEKE-ENSCH, Agnes, Nathalie, Iwana, B-6700 Arlon (BE); NGUYEN, Gia, Van, B-6730 Rossignol (BE)
(74) Representative: Leitz, Paul
(86) International application number: US9814452
(87) International publication number: WO00002740

(56) References cited:
- EP-A- 0 605 177
- EP-A- 0 778 164
- WO-A-98/54014
- DE-A- 2 814 937
- FR-A- 2 287 350
- FR-A- 2 425 334
- FR-A- 2 460 218

## Description

### TECHNICAL FIELD

The present invention relates to a pneumatic, radial ply, runflat tire whose runflat handling is improved by providing a structural means for stiffening the tread and its underlying support structure. More specifically, the invention relates to a runflat tire having increased rigidity laterally across the tread to resist upward buckling of the center part of the tread and its underlying structure during high-speed runflat operation, whereby the tread's ground contact, lateral grip and runflat operational life is enhanced.

### BACKGROUND OF THE INVENTION

Various methods have been devised for enabling the safe continued operation of unpressurized or underpressurized vehicle tires with the intent of minimizing further damage to the uninflated tire and without simultaneously compromising vehicle handling over a distance from the place where the tire has lost its pressure to a place desired by the driver, such as a service station, where the tire can be changed. Loss of tire pressure can result from a variety of causes, including puncture by a foreign object such as a nail or other sharp object piercing the pneumatic tire installed on a vehicle.

Pneumatic tires designed for sustained operation under conditions of unpressurization or underpressurization are also called runflat tires, as they are capable of being driven in the uninflated or "flat" condition. The conventional pneumatic tire, when operated without inflation, collapses upon itself, its sidewalls buckling outward in the region where the tread contacts the ground, when supporting a vehicle load. In general, the term "runflat" means that the tire structure alone has sufficient rigidity and strength to support the vehicle load when the tire is operated in the uninflated condition. The sidewalls and internal surfaces of the tire do not collapse or buckle onto themselves, and the tire does not otherwise contain or use other supporting structures or devices to prevent the tire from collapsing.

An early example of a runflat tire design is described in U.S. Pat. No. 4,111,249, entitled the "Banded Tire," in which a hoop or annular band approximately as wide as the tread is circumferentially deployed beneath the tread. The hoop in combination with the rest of the tire structure could support the vehicle weight in the uninflated condition.

Numerous methods have been used to achieve workable runflat tire designs. Generally, such tires incorporate sidewall designs that are thicker and/or stiffer, so that the tire's load can be carried by an uninflated tire with minimum adverse effects upon the tire itself and upon vehicle handling until such reasonable time as the tire can be repaired or replaced. The methods used in sidewall stiffening include the incorporation of circumferentially disposed inserts in the inner peripheral surface of the sidewall portion of the carcass, which is the region in the tire usually having the lowest resistance to deformation under vertical loading. In such runflat tire designs, the sidewalls are thickened in a way that each is approximately uniformly thick in the sidewall region between the bead and the tread. The reinforced sidewalls of such tires, when operated in the uninflated condition, experience a net compressive load. The outer portions of the reinforced sidewalls are in tension due to bending stresses which deflect the sidewalls outward or apart from one another in the regions of the sidewall adjacent to the ground-contacting portion of the tread. The inner portions of such reinforced sidewalls, in the region near where the tread contacts the ground, tend to be in compression during runflat operation. Due to the large amounts of rubber required to stiffen the sidewall members, heat buildup due to flexure of the sidewalls is a major factor in tire failure, especially when the uninflated tire is operated for prolonged periods at high speeds.

A Goodyear patent U.S. Pat. No. 5,368,082 ('082) disclosed a low aspect runflat pneumatic radial ply tire which employs special sidewall inserts to improve stiffness. Approximately six additional pounds of weight per tire was required to support an 800 lb load in this uninflated tire. This earlier invention, although superior to prior attempts at runflat tire design, still imposed a weight penalty that could be offset by the elimination of a spare tire and the tire jack. This weight penalty was even more problematic when the engineers attempted to build high-aspect-ratio tires for large luxury touring sedans. These taller sidewalled tires, having aspect ratios in the 55% to 65% range or greater, means that the sidewall bending stresses are greater than that of the earlier low-aspect-ratio runflat tires disclosed in the '082 patent. Thus the sidewalls of high profile tires had to be stiffened to the point of compromising ride characteristics, a result that is not generally acceptable for luxury vehicles, even to achieve runflat capability. The engineering requirements for runflat tire design are striving to achieve no loss in ride or handling. In the very stiff suspension performance type vehicle, such as sport cars and various sport/utility vehicles, the ability to provide such runflat tires is relatively straightforward compared to providing similar runflat tires for luxury sedans which require softer ride characteristics. Light trucks and sport utility vehicles, although not as sensitive to ride performance, provide a runflat tire market that ranges from accepting a stiffer ride to demanding the softer luxury type ride.

Considering runflat tire design in greater detail, it is typically based on the installation of one or more inserts inside each sidewall flex area. The inserts in each sidewall, in combination with the plies, add rigidity to the sidewalls in the absence of air pressure during runflat operation. While the high resistance to compressive deflection of the inserts provides the necessary resistance to the collapse of the uninflated loaded tire, this method has several drawbacks which include the above mentioned increase in tire weight and, especially during runflat operation, heat buildup in the insert reinforcements of the sidewalls.

Moreover, during runflat operation, the thick, reinforced sidewalls tend to transmit bending stresses to the portion of the tread that contacts the ground. The result is that the central portion of the tread tends to buckle upward from the ground. The upward buckle reduces the ground contact in the tread's central region, resulting in compromised vehicle handling as well as reduced runflat tread life.

Document WO-A-98/54014 published on 3 December 1998 and therefore, pursuant to Articles 54(3) and 56 EPC, to be considered only for assessing novelty, discloses a pneumatic radial ply runflat tire having a tread, a carcass with two sidewalls and two inextensible annular beads, a radial ply structure, two sidewall reinforcing inserts, and a belt structure located between the tread and the radial ply structure, and a circumferentially deployed compression-stress-bearing belt reinforcing layer located in the region of the belt structure and having reinforcing steel cords being aligned at an angle of between 18 and 30 degrees with respect to the equatorial plane of the tire, and a circumferentially deployed tensile-stress-bearing reinforcing layer located in the region of the radial ply structure and having reinforcing cords being aligned at an angle of between 50 to 80 degrees with respect to the equatorial plane of the tire.

A number of prior art documents disclose solutions to problems related to runflat tire operation. EP-A- 605 177 discloses a radial tire including at least one tie element layer for resisting force generated in width direction of the tire. FR-A- 460 218 discloses a radial tire having runflat inserts in the sidewalls. EP-A- 778 164 discloses a radial tire having runflat capability and an auxiliary layer between the carcass and the belt layer. FR-A- 2 287 350 discloses a radial tire having runflat capability and reinforcement members.

### OBJECTS OF THE INVENTION

An object of the invention is to provide a runflat radial tire having a laterally and circumferentially stiffened tread that resists upward buckling during runflat operation.

Another object of the invention is to provide a runflat radial tire having a laterally and circumferentially stiffened tread that gives superior high-speed runflat handling characteristics by improving the tread's runflat contact with the road.

Yet another object of the invention is to provide a runflat radial tire having a laterally and circumferentially stiffened tread that gives superior runflat service life as a result of reduced tread flexure.

### SUMMARY OF THE INVENTION

The present invention provides a pneumatic radial ply runflat tire as defined in the appended claims.

### BRIEF DESCRIPTION OF THE DRAWINGS

The invention will be described further upon consideration of the following description taken in conjunction with the accompanying drawings, wherein:
FIGURE 1 is a cross-sectional view of a prior art runflat tire design incorporating insert-reinforced sidewalls;
FIGURE 2a is a fragmentary cross-sectional schematic view of the ground-contacting portion of the prior art runflat tire of FIGURE 1 in normally inflated condition;
FIGURE 2b is a fragmentary cross-sectional schematic view of the ground-contacting portion of the prior art runflat tire of FIGURE 1 in an uninflated condition;
FIGURE 3 is an enlarged fragmentary schematic view of the upward-buckled central portion of the uninflated prior art tire shown in FIGURE 2b;
FIGURE 4 shows one arrangement of the present invention, including tensile load bearing and compressive load bearing reinforcement layers;
FIGURE 5a shows the compression-stress-bearing belt reinforcing layer of the present invention;
FIGURE 5b shows the orientation angle of the cords in the belt reinforcing layer of FIGURE 5a;
FIGURE 5c shows the tensile-stress-bearing fabric reinforcing layer in accordance with the present invention;
FIGURE 5d shows the orientation angle of the cords in the fabric reinforcing layer of the present invention;
FIGURE 6 is a schematic view of a structural I-beam which demonstrates the mechanical actions of the inventive concept of the present invention in contributing to the stiffening of the tread and underlying structures of the improved tire design disclosed herein;
FIGURE 7 is a fragmentary cross section of the central portion of the tread and underlying carcass structure of the tire illustrated in FIGURE 4; and
FIGURE 8 is a cross-sectional view of a pneumatic, radial runflat tire where in a fabric overlay is used in conjunction with another embodiment of the present invention.

### DEFINITIONS

"Apex" means an elastomeric filler located radially above the bead core and between the plies and the turnup plies.

"Aspect Ratio" means the ratio of the section height of a tire to its section width.

"Axial" and "Axially" means the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Belt Structure" or "Reinforcement Belts" or "Belt Package" means at least two annular layers or plies of parallel cords, woven or unwoven, underlying the tread, unanchored to the bead, and having both left and right cord angles in the range from about 18° to 30° relative to the equatorial plane of the tire.

"Breakers" or "Tire Breakers" means the same as belt or belt structure or reinforcement belts.

"Carcass" means the tire structure apart from the belt structure, tread, undertread over the plies, but including the beads.

"Casing" means the carcass, belt structure, beads, sidewalls and all other components of the tire excepting the tread and undertread.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Crown" or "Tire Crown" means the tread, tread shoulders and the immediately adjacent portions of the sidewalls.

"Equatorial Plane" means the plane perpendicular to the tire's axis of rotation and passing through the center of its tread; or the plane containing the circumferential centerline of the tread.

"Footprint" means the contact patch or area of contact of the tire tread with a flat surface.

"Inner Liner" means the layer or layers of elastomer or other material that form the inside surface of a tubeless tire and that contain the inflating fluid or gas within the tire.

"Insert" means the crescent-shaped or wedge-shaped reinforcement typically used to reinforce the sidewalls of runflat-type tires; it also refers to the elastomeric non-crescent-shaped insert that underlies the tread.

"Lateral" means a direction parallel to the axial direction.

"Normal Inflation Pressure" means the specific design inflation pressure at a specified load assigned by the appropriate standards organization for the service condition of the tire.

"Normal Load" means the specific design load at a specified inflation pressure assigned by the appropriate standards organization for the service condition of the tire.

"Ply" means a cord-reinforced layer of rubber-coated radially deployed or otherwise parallel cords.

"Radial" and "radially" mean directions radially toward or away from the axis of rotation of the tire.

"Radial Ply Structure" means the one or more carcass plies or which at least one ply has reinforcing cords oriented at an angle of between about 65° and 90° with respect to the equatorial plane of the tire.

"Radial Ply Tire" means a belted or circumferentially-restricted pneumatic tire in which at least one ply has cords that extend from bead to bead and are laid at cord angles between about 65° and about 90° with respect to the equatorial plane of the tire.

"Section Height" means the radial distance from the nominal rim diameter to the outer diameter of the tire at its equatorial plane.

"Section Width" means the maximum linear distance, parallel to the axis of the tire and between the exterior of its sidewalls, when and after it has been inflated at normal inflation pressure for 24 hours, but unloaded, excluding elevations of the sidewalls due to labeling, decoration or protective bands.

"Shoulder" means the upper portion of sidewall just below the tread edge.

"Sidewall" means that portion of a tire between the tread and the bead.

"Tangential" and "Tangentially" refer to segments of circular curves that intersect at a point through which can be drawn a single line that is mutually tangential to both circular segments.

"Tread Contour" means the shape of a tire tread as viewed in axial cross section.

"Tread Width" means the arc length of the tread surface in the plane includes the axis of rotation of the tire.

"Wedge Insert" means the same as "Insert."

### DETAILED DESCRIPTION OF THE PREFERRED EMBODIMENT

### Prior Art Embodiment

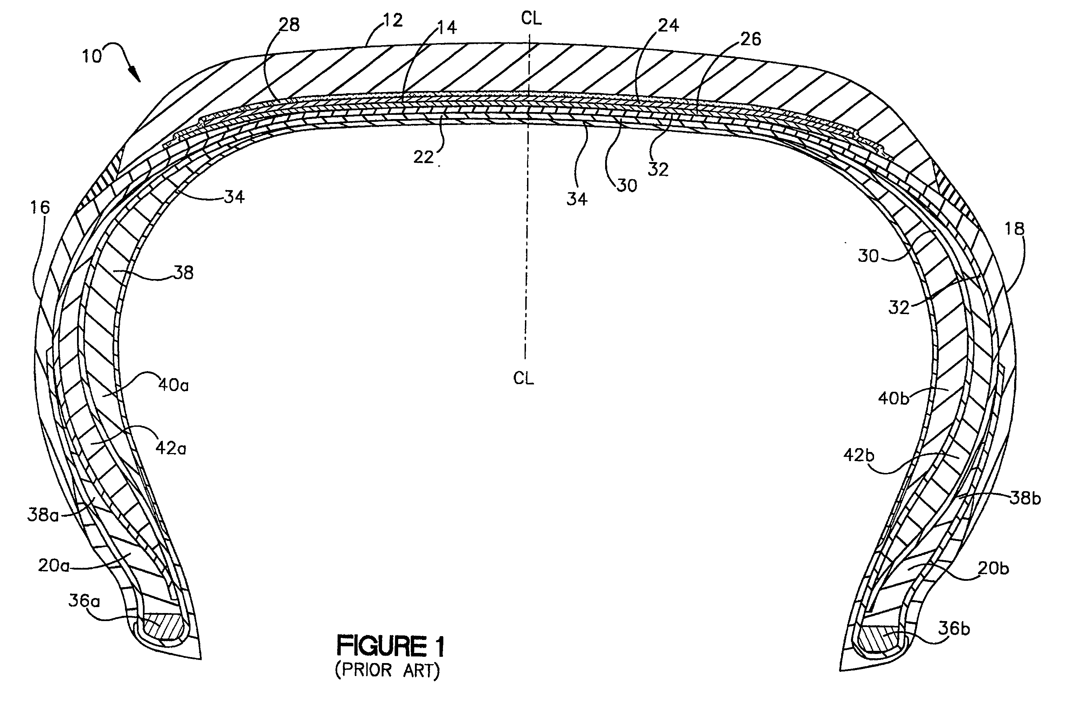

With reference to FIGURE 1, a cross section of a typical, prior art low-profile pneumatic radial runflat tire 10 is illustrated. The tire 10 has a tread 12, a belt structure 14, a pair of sidewall portions 16,18, a pair of bead regions 20a,20b and a carcass structure 22. Belt structure 14 consists of two belts 24,26 and a fabric overlay 28 deployed between the bottom portion of tread 12 and the upper parts of the belt structure. The fabric overlay 28 is applied by conventional means such as by helically winding a cord reinforced ribbon. The carcass 22 includes a first ply 30 and second ply 32, a gas-impervious inner liner 34, a pair of beads 36a,36b, a pair of bead filler apexes 38a,38b, a first pair of inserts 40a,40b, and a second pair of inserts 42a,42b. The first or innermost insert 40a,40b is located between the inner liner 34 and the first ply 30, and the second insert 42a, 42b is located between the first ply 30 and second ply 32. Fabric overlay 28 is disposed beneath, or radially inward of, tread 12 and on top of, or radially outward from, belt structure 14. The reinforced sidewall portions 16,18 of carcass structure 22 give the tire 10 a limited runflat capability.

As can be seen from FIGURE 1, the structural reinforcement in the sidewall area of the tire 10 substantially increases the overall thickness of the sidewall portions 16,18. This generalized prior art runflat tire design shows the more or less uniformly thickened sidewalls that characterize runflat tire designs. Such insert-reinforced sidewalls are necessary to support the tire's load with minimal sidewall deformation when the tire 10 is in an underinflated or uninflated state. Such runflat tire designs provide reasonable vehicle handling and performance under conditions of full inflation, and they yield reasonable runflat tire life and vehicle handling when the tire is underinflated or uninflated. Runflat tires generally weigh more than equivalent non-runflat-capable tires, because of the additional weight of the reinforcement material in the sidewalls; this additional weight is greater in high-profile runflat tires than in low-profile runflat tires.

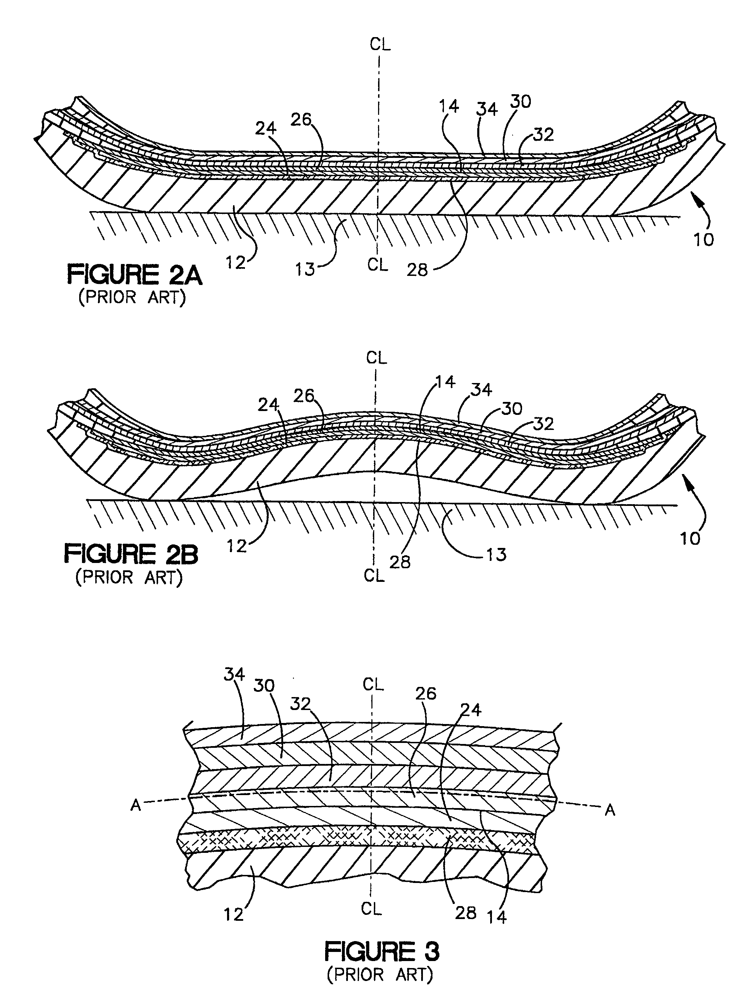

FIGURE 2a shows a fragmentary schematic of a normally inflated prior art tire, such as illustrated in FIGURE 1, with its tread 12 in contact with the ground 13. The flattening of the tread 12, in the region where it contacts the ground 13, induces bending stresses in the tread and its underlying components, including belt structure 14, overlay fabric 28, belts 24,26, radial plies 30,32, and inner liner 34. More specifically, the bending stresses derive from the flattening of the tread 12 from the as-molded and/or the as-inflated lateral curvature of tread and its underlying structures. These bending stresses induce tensile stresses in the radially inward structures beneath tread 12, such as the inner liner 34 and the radial plies 30,32. Corresponding compressive stresses are induced in the elastomeric material of tread 12 and such underlying structures as the fabric overlay 28 and portions of the belt structure 14.

FIGURE 2b illustrates the upward buckling of tread 12 of the uninflated prior art runflat tire 10 in the region where the load-bearing tread contacts the flat road surface 13. The upward buckling of the central tread region corresponds to the formation of bending stresses in the central portions of tread 12 and its underlying structures. The bending stresses in the tread 12 during runflat operation, as illustrated in FIGURE 2b, are greater than those associated with simple flattening of the tread during normal-inflated operation, as illustrated in FIGURE 2a.

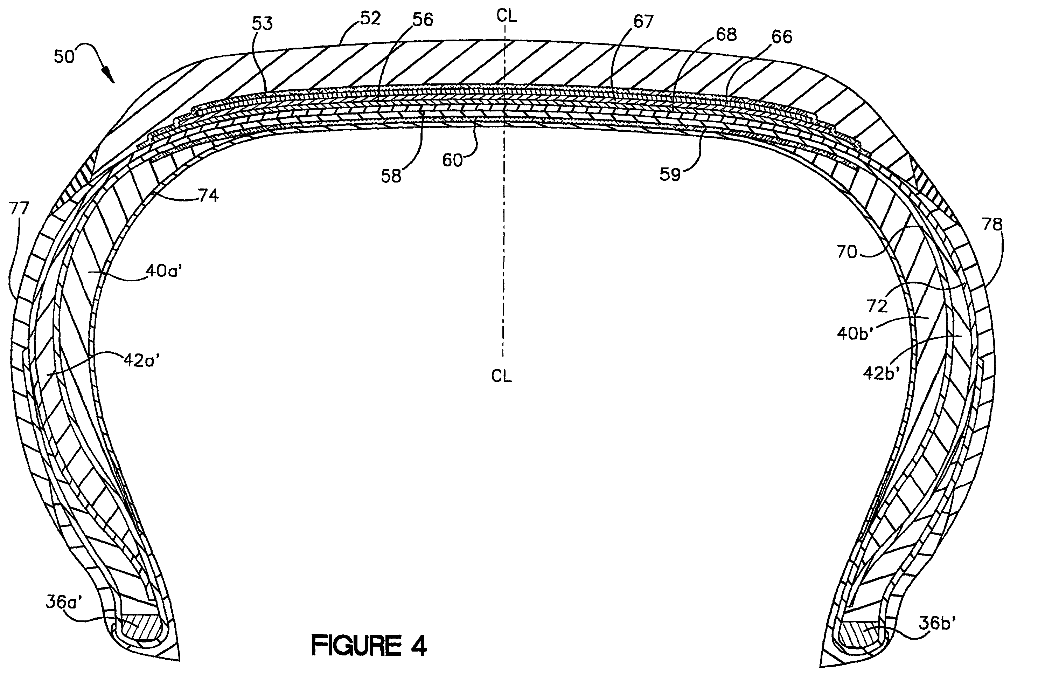

FIGURE 3 is a fragmentary schematic detail (not in exact proportion) of the belts 24,26, plies 30,32, inner liner 34 and fabric overlay 28 as they would appear within the upward-buckled central portion (shown in FIGURE 2b) of the tread 12 of the prior art tire. The neutral bending axis A-A shown in FIGURE 3 is shown located in a plausible relationship with respect to the fabric overlay 28, belts 24,26, plies 30,32 and inner liner 34. Those skilled in the art will appreciate that, in FIGURE 3, the structural elements of tread 12 which lie above the neutral axis A-A -i.e., radially inward of the tread 12 -- will experience tensile loading, while those structures located below the neutral axis A-A, i.e., closer to inner liner 34, will experience compressive loading in an underinflated or uninflated tire. The location of neutral axis A-A in relation to belts 24,26 is approximate, taking into account the tensile-stress-bearing capabilities of radial plies 30,32 and the compressive-stress-bearing capabilities of the belts 24,26. The neutral axis A-A is shown to be located within belt 24 purely as an approximation of where it would lie given the relative greater modulus of elasticity of the steel cords in belts 24,26 compared to the modulus of the cords that reinforce the plies 30,32.

### Preferred Embodiment

FIGURE 4 shows a pneumatic, radial ply, runflat tire 50 according to the present invention. Tire 50 has the same general sidewall construction as that of the prior art runflat tire 10 shown in FIGURE 1. One of the inventive features of tire 50 in FIGURE 4 is the addition of a tensile-stress-bearing, cord-reinforced fabric layer 59, deployed between the inner liner 74 and the radially innermost radial ply 70. Another inventive feature of tire 50 is a compression-stress-bearing incompressible layer 66 which, in the specific illustration of FIGURE 4, is shown deployed above, or radially outward of, the belt structure 56 and beneath, or radially inward of, fabric overlay 53. In FIGURE 4 and elsewhere in the specification, primed and double primed numbers represent structural elements which are substantially identical to structural elements represented by the same unprimed number.

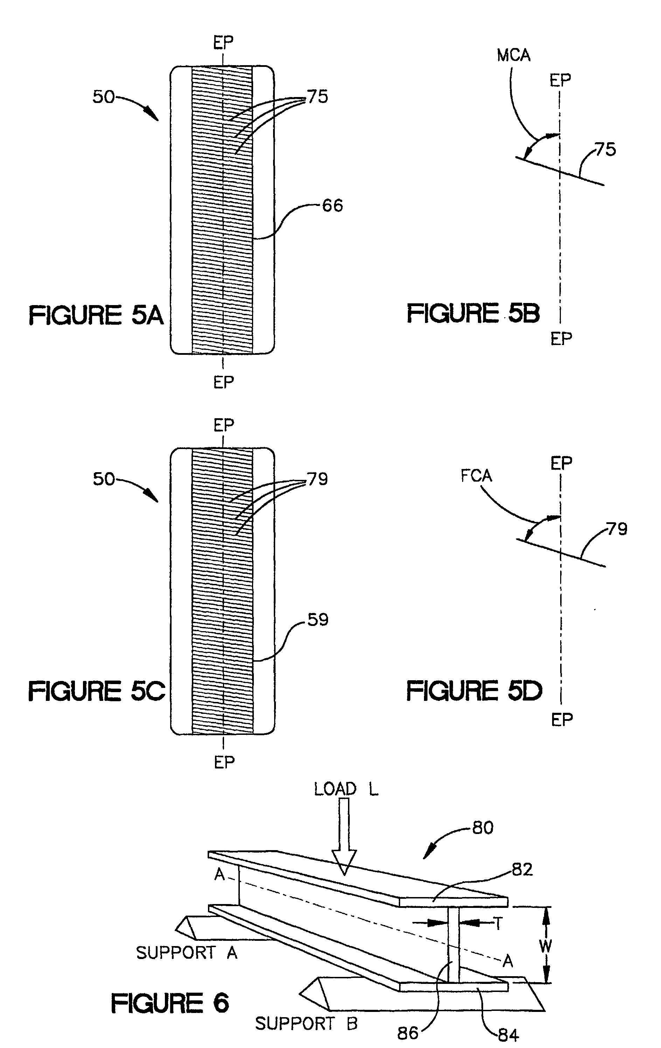

In FIGURE 4, the width of the compression-stress-bearing reinforcement 66 is generally the same or less than that of the belt structure 56. FIGURE 5a is a fragmentary schematic cross-sectional view of tire 50 showing the circumferentially deployed belt reinforcement 66, as it would appear if the tread and other overlying structures were removed. Belt reinforcement 66 is constructed of a plurality of wire or metal cords 75, as discussed in more detail below. FIGURE 5b shows the metal cord angle MCA of incompressible metal cords 75 with respect to the equatorial plane EP of tire 50.

As illustrated in FIGURE 4, the width of the tensile-stress-bearing fabric reinforcement 59 is generally the same as the of the overlying belt structure 56. FIGURE 5c is a fragmentary schematic cross-sectional view of tire 50 showing the circumferentially deployed fabric reinforcement 59, as it would appear if the tread and plies and other overlying structures were removed. Fabric reinforcement 59 is constructed of high-modulus cords 79 as discussed in more detail below. FIGURE 5d shows the fabric cord angle FCA of the high-modulus cords 79 with respect to the equatorial plane EP of tire 50. The practice of the inventive concept will become evident in the description below.

### Operational Dynamics of the Preferred Embodiment

Referring to FIGURE 4, one of the two inventive features incorporated in tire 50 is the compression-stress-bearing reinforcement 66, circumferentially deployed, in the instance of FIGURE 4, on top of, or radially outward from, belt structure 56. In specific reference to the location of the belt reinforcement 66, it is believed that the belt reinforcement can serve generally the same operational function if it is placed between the belts 67,68 of the belt structure 56, or radially inward of the belt structure and radially outward of the ply structure 58 comprising plies 70,72.

A second of the inventive features, as shown in FIGURE 4, is the tensile-stress-bearing fabric layer 59 which is circumferentially deployed, in the embodiment illustrated in FIGURE 4, immediately radially inward of the ply structure 58 and immediately radially outward of the inner liner 74. In specific reference to the location of the tensile-stress-bearing fabric reinforcement 59, it is also within the terms of the invention for the fabric reinforcement to serve generally the same operational function when placed between the plies 70,72 of ply structure 58, or immediately radially outward of the ply structure and radially inward of the belt structure 56 comprising belts 67,68.

The operational dynamics of the inventive features of the present invention become clearer upon consideration of FIGURE 2b and FIGURE 3. FIGURE 2b shows a cross-sectional view of the upward buckled tread 12 of the prior art tire 10 when it is operated in an uninflated condition. FIGURE 3 shows a close-up view of the central-most portion of the upward-buckled tread 12. The neutral bending axis A-A in FIGURE 3 is shown located close to the interface between the high-modulus belt structure 14 comprising belts 24,26 and the ply structure 58. Those knowledgeable of the art will recognize that bending of tread 12, and of such underlying structures as the belt structure 14 and the radial plies 30,32, results in the formation of tensile stresses in those parts of the tire's structure that lie upwards (towards the inner liner 34) of the neutral bending axis A-A shown in FIGURE 3, while compressive stresses will be induced in those portions of the tire that are situated below (towards the overlay 28) the neutral bending axis A-A.

The present invention gives increased lateral and circumferential rigidity to the tread 12, thereby increasing the tread's resistance to buckling, and the structures underlying the tread during runflat operation. The method and structures of the present invention, as illustrated in FIGURE 4, include incorporating either one or more high-modulus, tensile-load-bearing reinforcements 59 within or adjacent to the ply structure 58 and/or one or more high-modulus compressive-stress-bearing reinforcements 66 within or adjacent to belt structure 56 underlying the tread 52.

In one embodiment, the respective tensile-load-bearing and compressive-load-bearing reinforcing layers, are deployed in the region adjacent to the neutral bending axis A-A, as shown in FIGURE 3. More specifically, as shown in FIGURE 4, one or more high-modulus, tensile-stress-bearing reinforcements or layers 59 are deployed in the region adjacent to the neutral bending axis A-A (on the side of the inner liner 34 in FIGURE 3) where tensile stresses are produced during buckling of the tread 12. In addition, one or more high-modulus, compressive-stress-bearing reinforcements or layers 66 are deployed in the region adjacent to the neutral axis A-A (on the side of the overlay 28 in FIGURE 3) where compressive stresses are produced during upward buckling of the tread.

A second mechanism by which to stiffen the tread 12 involves the separation between the tension-bearing reinforcements 59 and the compression-bearing reinforcements 66. This separation is, in the present invention, brought about by the simple addition of reinforcement layers to the respective compression-stress and tensile-stress regions adjacent to the neutral bending axis A-A, as shown in FIGURE 3.

The basic principle of separation of the tensile and compressive elements becomes evident in the contemplation of a structural I-beam 80, as illustrated in FIGURE 6, where the web portion 86 of the I-beam separates the respective compression-bearing and tension-bearing flanges 82,84, respectively. More specifically, FIGURE 6 shows an I-beam 80, supported at its ends by support elements A and B. I-beam 80 is shown supporting a central load L, which is such that the upper flange 82 of the I-beam is in compression, while the lower flange 84 is in tension. The flanges 82,84 are separated from one another by web 86. Assuming that the dimensions and physical properties of flanges 82,84 are uniform and isotropic, and that the thickness of the web 86 is uniform between the flanges, then the neutral bending axis A-A will occur along the center of the I-beam 80, as shown in FIGURE 6. As the width W of web 86 increases, the moment of inertia of I-beam 80 correspondingly increases with respect to bending under the force of load L. In other words, the rigidity of the I-beam 80, with respect to deformation under the weight of load L, increases in direct relation to the width W of web 86, as it separates flanges 82,84. Similarly, in FIGURES 2a, 2b and 3, the tread 12 of the prior art tire 10 could be made stiffer and more resistant to buckling if the tension-bearing plies 30,32 and the compression-bearing belts 24,26 were both to be increased in strength (corresponding to thicker flanges 82,84 in FIGURE 6) and separated farther from one another (corresponding to a wider web 86 in FIGURE 6).

The present invention, as shown in FIGURE 4, achieves tread stiffening, or resistance to buckling under runflat conditions, by the addition of one or the other or both of the belt reinforcements 66, which resists compressive strain deformation, and the fabric reinforcement 59, which resists tensile strain deformation. In reference to the I-beam analogy in FIGURE 6, the respective belt and fabric reinforcements 66,59 correspond to the I-beam flanges 82,84. Also, the additional thickness of the tread 52 and its underlying carcass structure 60 and belt structure 56, plus the compressive reinforcement layer 66 and tensile reinforcement layer 59, give a greater thickness to the carcass structure and belt structure, which additional thickness corresponds, in the I-beam analogy, to the rigidity-inducing benefits of increasing the width W of the web 86 of I-beam 80 shown in FIGURE 6.

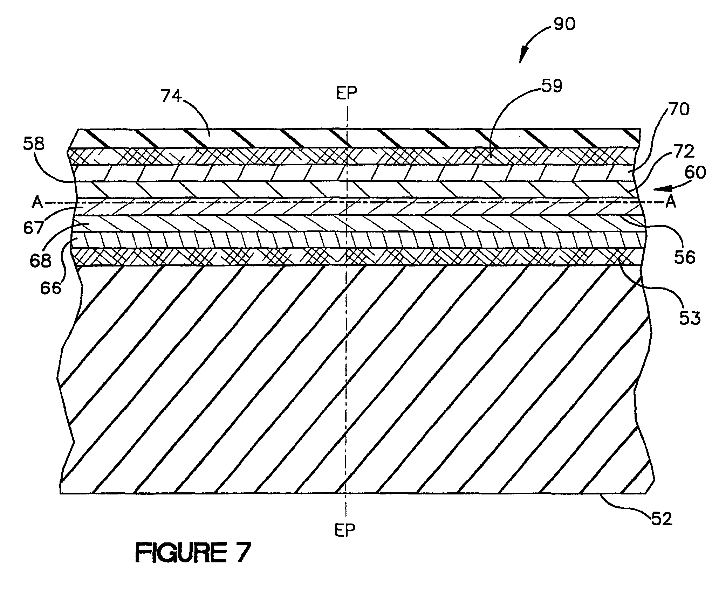

FIGURE 7 shows a fragmentary cross-sectional view of a segment of tread 52 and underlying carcass 90 in the region of the equatorial plane EP. Carcass segment 90 comprises inner liner 74, tensile-stress-bearing fabric layer 59, ply structure 58 (with plies 70,72), belt structure 56 (with belts 67,68), compressive-stress-bearing layer 66, and fabric overlay 53.

The benefits of the incorporation of one or more belt reinforcement layers 66 and/or one or more fabric layer reinforcement layers 59 can be more specifically appreciated by discussing each reinforcement separately in relationship to neutral bending axis A-A, as shown in FIGURE 7.

### Compression-Stress-Bearing Belt Reinforcement Layer

In FIGURES 4 and 7, the compression-stress-bearing reinforcing layer 66 is shown located radially outward of belt structure 56 which comprises belts 67,68. The circumferentially deployed reinforcing layer 66 is constructed from incompressible, high-modulus material such as wire or metal cords 75, as shown in FIGURE 5a. FIGURE 5b shows the metal cord angle MCA of the metal wires or cords 75 with respect to the equatorial plane EP of tire 50. The cord angle MCA is 45 degrees to 85 degrees, and most preferably about 80 degrees with respect to the EP. The cord angles as defined herein include both the right and left or plus and minus directions.

FIGURE 7 shows a plausible location for the neutral bending axis A-A of a flat carcass segment 60 in the-region of the tire's equatorial plane EP.

In FIGURE 7, the portions of carcass 90 located below, or radially outward of, the neutral bending axis A-A will experience compressive stresses during runflat operation, while the portions of the carcass located above, or radially inward of, the neutral bending axis will experience tensile stresses during runflat operation.

The location of the belt reinforcement layer 66, shown in FIGURES 4 and 7, is in the most extreme position with respect to the neutral bending axis A-A, which thereby gives the maximum mechanical advantage to the belt reinforcement layer with respect to resisting compressive stresses associated with runflat operation -- in other words, belt reinforcement layer 66, in the location shown in FIGURES 4 and 7, has a mechanical advantage in resisting upward buckling of the central portion of the tread 52 during runflat operation.

The inventors recognize that more than one compression-stress-bearing layer 66 would correspondingly increase the lateral and circumferential rigidity of tread 52 with respect to upward buckling during runflat operation of tire 50. The inventors also recognize the potential for tailoring the lateral rigidity of tread 52 by means of deploying the one or more compressive-stress-bearing layers 66 between the belts 67,68 of the belt structure 56, or radially inward of the belt structure to further minimize the effect on inflated tire performance, or by distributing two or more reinforcement layers among the belts 67,68.

### Tensile-Stress-Bearing Fabric Reinforcement Layer:

In FIGURES 4 and 7, tensile-stress-bearing reinforcing fabric layer 59 is shown located radially inward of the ply structure 58, which comprises radial plies 70,72. The circumferentially deployed fabric reinforcing layer 59 is constructed from fabric that is reinforced with high-modulus cords made from materials of the type that come from the family of materials that include aramid, rayon, and polyester. FIGURE 5c shows the circumferential fabric layer 59 and its reinforcing cords 79. FIGURE 5d shows the fabric cord angle FCA of the reinforcing cords 79 with respect to the equatorial plane EP of tire 50. The cord angle FCA is 45 degrees to 85 degrees, and most preferably about 80 degrees, each with respect to the EP.

In FIGURE 7, the portions of carcass segment 90 located above, or radially inward of, the neutral bending axis A-A will experience tensile stresses during runflat operation. The location of the fabric reinforcement layer 59, shown in FIGURES 4 and 7, is in an extreme location with respect to the neutral bending axis A-A, which thereby gives the maximum mechanical advantage to the fabric reinforcement layer with respect resisting tensile stresses associated with runflat operation. That is, fabric (textile) reinforcement layer 59, in the location shown in FIGURES 4 and 7, has mechanical advantage in resisting upward buckling of the central portion of the tread 52 during runflat operation.

The inventors recognize that more than one tensile-stress-bearing layer 59 would correspondingly increase the lateral and circumferential rigidity of tread 52 with respect to upward buckling during runflat operation of tire 50. The inventors also recognize the potential for tailoring the lateral rigidity of tread 52 by means of deploying the one or more tensile-stress-bearing fabric layers 59 between the plies 70,72 of the ply structure 58, or radially outward of the ply structure, or by distributing two or more reinforcement layers among the plies 70,72.

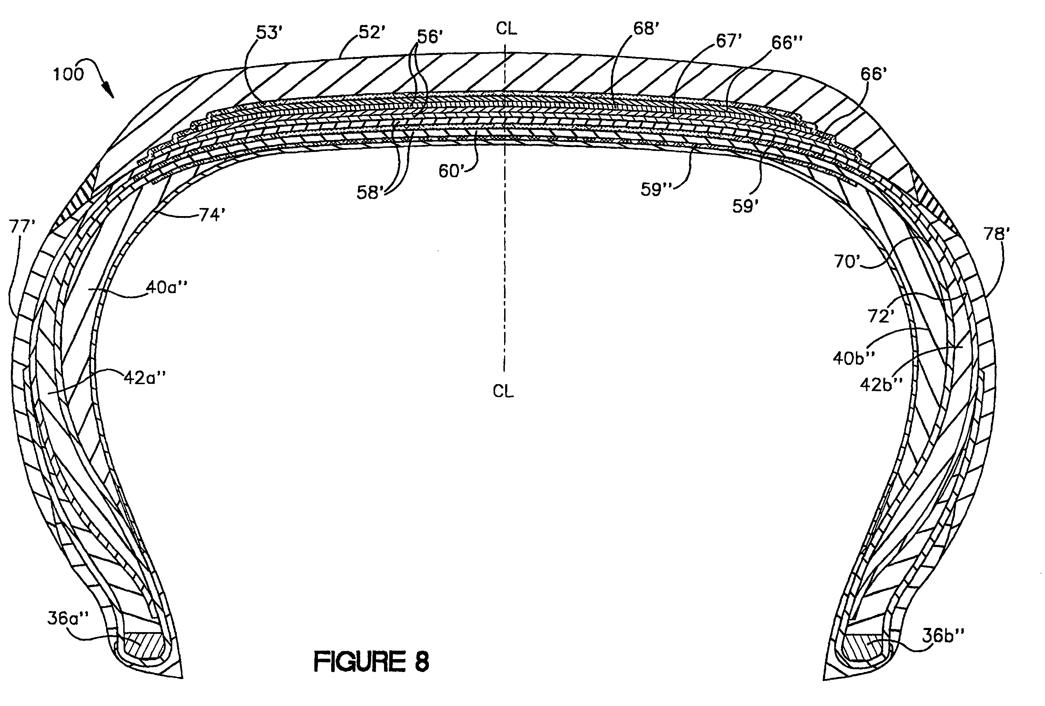

FIGURE 8 is a cross-sectional view of one embodiment of the present invention as used in a pneumatic radial ply runflat tire 100 in which two compressive-stress-reinforcing layers 66',66'' are deployed such that one reinforcing layer 66'' of them is located radially outward of the radially outer-most belt 68' while the other 66' is located between the belts 67' and 68'. Additionally, two tensile-stress-bearing fabric reinforcement layers 59',59'' are deployed such that one fabric layer 59' is located radially inward of the radially inner-most ply 72' while the other fabric layer 59'' is located between the two plies 70' and 72'. Typically the reinforcing cords of the adjacent reinforcement layers are in crossed relation to each other. The angles of the cords are disposed at the same angles as the cords of a single reinforcement layer as previously defined.

### Operation of the Inventive Concept in Relation to Prior Art

The inventive concept addresses the tread buckling (which is also known as "tread lift") associated with runflat tires when they are operated in the runflat mode.

To reiterate the origins of the tread buckling associated with runflat operation of runflat-type tires, the reinforced sidewalls 16,18 of a prior art uninflated runflat tire 10 of the type shown in FIGURE 1 tend to buckle axially outwards in such a way as to transmit upward-directed bending stresses to the tread 12 and underlying structures such that the central portion of the tread has reduced to zero contact with the road. Upward buckling of the tread can have adverse effects upon vehicle handling in the runflat mode, especially during high-speed operation. In addition, the cyclical flexing of the tread during runflat operation tends to cause heating of the tread material, especially during high-speed operation, which can cause accelerated deterioration of the tire structure in the region of the tread, thereby reducing the runflat tire's operating life in the runflat mode. A hypothetically perfect runflat tire would be able to maintain the central portion of its tread in the same degree of road contact during runflat operation as during fully inflated operation.

In this invention, the incorporation of the one or more compressive-stress-bearing metal reinforcements 66',66'' in the region of the belt structure 56' (FIGURE 8) and the incorporation of the one or more tensile-stress-bearing fabric reinforcements 59',59'' in the region adjacent to or within the ply structure 58' work to increase the lateral and circumferential rigidity of the tread 52'.

Thus it follows, as shown in FIGURE 8, that the compression-load-bearing capacity of the reinforced belt structure 56' and the tensile-load-bearing capacity of the fabric reinforced ply structure 58' result in a runflat tire 100 having a tread 52' whose lateral rigidity resists the upward buckling of the central portion of the tread during runflat operation. This invention, by increasing the lateral and circumferential rigidity of the tread, gives enhanced runflat vehicle handling and increased runflat tire life. Further, the addition of the reinforcements to the belt and ply structure improves the inflated footprint pressure distribution giving better wear and handling during normal inflation pressure operation.

### EMBODIMENT ONE

Referring to FIGURE 4, there is illustrated a first embodiment of the invention within a runflat radial ply tire 50. Such an embodiment would have potential for runflat use in high-performance sports type vehicles or light trucks, if provided as a low-aspect-ratio runflat radial ply runflat pneumatic tire, or if provided as a high-aspect-ratio tire for luxury-type vehicles, high-standing sport-utility vehicles, and some light trucks. Tire 50 contains two belts 67,68, two plies 70,72, a belt reinforcing layer 66 and a fabric reinforcing layer 59. Fabric reinforcement layer 59 has reinforcing cords 79 that are oriented more or less laterally across the crown region of tire 50. Belt reinforcement layer 66 has metal reinforcing cords 75 also oriented more or less laterally across the crown region of tire 50. The metal belt reinforcement layer 66 contributes compressive strain resistance to the belt structure 56. The fabric reinforcement layer 59 contributes tensile strain resistance to the ply structure 58. During runflat operation, the improved lateral rigidity of the tread gives better vehicle handling and stability during high-speed runflat operation as well as increased runflat tire life.

### EMBODIMENT TWO

A second embodiment is envisioned in which this invention is incorporated within a radial ply runflat tire, as also shown in FIGURE 4, having at least one radial ply 70 or 72 which is reinforced by essentially inextensible fibers or cords made of metal such as steel, such as is disclosed in U.S. Patent Application 08/865,489, and in which the aspect ratio of the tire can be low or high or intermediate between the maximum and minimum values of aspect ratios for runflat tires.

### EMBODIMENT THREE

A third embodiment is shown in FIGURE 8, where two compressive-stress-reinforcing layers 66',66'' are deployed such that one is located radially outward of the radially outer-most belt 68' while the other is located between the belts 67' and 68'. This embodiment also contains two tensile-stress-bearing fabric reinforcement layers 59',59" which are deployed such that one fabric layer 59'' is located radially inward of the radially inner-most ply 70' while the other fabric layer 59' is located between the two plies 70',72'. Typically the reinforcing cords of the adjacent reinforcement layers are in crossed relation to each other. The angles of the cords are disposed at the same angles as the cords of a single reinforcement layer, as previously defined.

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the scope of the appended claims.

## Claims

1. A pneumatic radial ply runflat tire (50; 100) having a tread (52; 52'), a carcass (60; 60') with two sidewalls (77, 78; 77', 78') and two inextensible annular beads (36a', 36b'; 36a", 36b"), a radial ply structure (58; 58'), one or more sidewall reinforcing inserts (40a', 40b', 42a', 42b'; 40a", 40b", 42a", 42b"), and a belt structure (56; 56') located between the tread and the radial ply structure;
and at least one circumferentially deployed compression-stress-bearing belt reinforcing layer (66; 66', 66") located in the region of the belt structure (56; 56') and having reinforcing metal cords (75) being aligned at an angle of between 45 and 85 degrees with respect to the equatorial plane of the tire;
and at least one circumferentially deployed tensile-stress-bearing fabric reinforcing layer (59; 59', 59") located in the region of the radial ply structure (58; 58') and having reinforcing fabric cords (79) being aligned at an angle of between 45 to 85 degrees with respect to the equatorial plane of the tire.

2. The tire (50) of claim 1 in which the width of the at least one circumferentially deployed belt reinforcing layer (66) and the at least one circumferentially deployed fabric reinforcing layer (59) are approximately equal to the width of the belt structure (56).

3. The tire (50) of claim 1 wherein the at least one belt reinforcing layer (66) has reinforcing metal cords (75) being aligned at about 80 degrees with respect to the equatorial plane of the tire.

4. The tire (50) of claim 1 wherein the fabric reinforcing layer (59) is deployed between the innerliner (74) and the radially innermost radial ply (70).

5. The tire (50) of claim 1 wherein the at least one fabric reinforcing layer (59) has reinforcing cords (79) aligned at about 80 degrees with respect to the equatorial plane of the tire.

6. The tire (50) of claim 5 in which at least one of the radial plies (70,72) of the radial ply structure (58) is reinforced with inextensible metal cords.

7. The tire (50) of claim 1 wherein the fabric reinforcing layer (59) is constructed from fabric reinforced with high-modulus cords made from aramid, rayon or polyester.

8. The tire (50) of claim 1 wherein the belt reinforcing layer (66) is deployed radially outward of the belt structure (56) and radially inward of a fabric overlay (53).

9. The tire (50) of claim 1 wherein the belt reinforcing layer (66) is placed between the belts (67,68) of the belt structure (56).

10. The tire (50) of claim 1 wherein the fabric reinforcing layer (59) is placed immediately radially outward of the radial ply structure (58) and radially inward of the belt structure (56) comprising two belts (67,68).

## Patentansprüche

1. Radiallagen-Notlauf-Luftreifen (50; 100) mit einem Laufstreifen (52; 52'), einer Karkasse (60; 60') mit zwei Seitenwänden (77, 78; 77', 78') und zwei undehnbaren ringförmigen Wülsten (36a', 36b'; 36a", 36b"), einer Radiallagen-Struktur (58; 58'), einem oder mehreren Seitenwandverstärkungs-Einsatz/Einsätzen (40a', 40b', 42a', 42b'; 40a", 40b", 42a", 42b") und einer zwischen dem Laufstreifen und der Radiallagenstruktur angeordneten Gürtelstruktur (56; 56');
und mindestens einer in Umfangsrichtung eingesetzten, Druckspannungen aufnehmenden, in dem Bereich der Gürtelstruktur (56; 56') angeordneten Gürtelverstärkungsschicht (66; 66'; 66") mit Verstärkungsmetallkorden (75), die mit einem Winkel von zwischen 45 und 85 Grad mit Bezug auf die Äquatorialebene des Reifens ausgerichtet sind;
und mindestens einer in Umfangsrichtung eingesetzten, Zugspannungen aufnehmenden, in dem Bereich der Radiallagenstruktur (58; 58') angeordneten Gewebeverstärkungsschicht (59; 59', 59") mit Verstärkungsgewebekorden (79), die mit einem Winkel von zwischen 45 und 85 Grad mit Bezug auf die Äquatorialebene des Reifens ausgerichtet sind.

2. Reifen (50) nach Anspruch 1, in welchem die Breite der mindestens einen in Umfangsrichtung eingesetzten Gürtelverstärkungsschicht (66) und der mindestens einen in Umfangsrichtung eingesetzten Gewebeverstärkungsschicht (59) annähernd gleich der Breite der Gürtelstruktur (56) ist.

3. Reifen (50) nach Anspruch 1, bei dem die mindestens eine Gürtelverstärkungsschicht (66) Verstärkungsmetallkorde (75) aufweist, die mit etwa 80 Grad mit Bezug auf die Äquatorialebene des Reifens ausgerichtet sind.

4. Reifen (50) nach Anspruch 1, bei dem die Gewebeverstärkungsschicht (59) zwischen die Innenauskleidung (74) und die radial innerste Radiallage (70) eingesetzt ist.

5. Reifen (50) nach Anspruch 1, bei dem die mindestens eine Gewebeverstärkungsschicht (59) Verstärkungskorde (79) aufweist, die mit etwa 80 Grad mit Bezug auf die Äquatorialebene des Reifens ausgerichtet sind.

6. Reifen (50) nach Anspruch 5, bei dem mindestens eine der Radiallagen (70, 72) der Radiallagenstruktur (58) mit undehnbaren Metallkorden verstärkt ist.

7. Reifen (50) nach Anspruch 1, bei dem die Gewebeverstärkungsschicht (59) mit Gewebe aufgebaut ist, das mit aus Aramid, Reyon oder Polyester hergestellten Hochmodulkorden verstärkt ist.

8. Reifen (50) nach Anspruch 1, bei dem die Gürtelverstärkungsschicht (66) radial außerhalb der Gürtelstruktur (56) und radial innerhalb einer Gewebeabdeckung (53) eingesetzt ist.

9. Reifen (50) nach Anspruch 1, bei dem die Gürtelverstärkungsschicht (66) zwischen die Gürtel (67, 68) der Gürtelstruktur (56) gesetzt ist.

10. Reifen (50) nach Anspruch 1, bei dem die Gewebeverstärkungsschicht (59) unmittelbar radial außerhalb der Radiallagenstruktur (58) und radial innerhalb der zwei Gürtel (67, 68) umfassenden Gürtelstruktur (56) angeordnet ist.

## Revendications

1. Bandage pneumatique à nappe radiale permettant de rouler à plat (50 ; 100) possédant une bande de roulement (52 ; 52'), une carcasse (60 ; 60') comprenant deux flancs (77, 78 ; 77', 78') et deux talons annulaires inextensibles (36a', 36b' ; 36a", 36b"), une structure de nappes radiale (58 ; 58') possédant au moins une nappe radiale (70 ou 72), une ou plusieurs pièces rapportées de renforcement des flancs (40a', 40b' ; 42a', 42b' ; 40a", 40b" ; 42a", 42b") et une structure de ceintures (56 ; 56') disposée entre la bande de roulement et la structure de nappes radiale ;
et au moins une couche de renforcement de ceinture supportant les contraintes de compression, déployée en direction circonférentielle (66 ; 66', 66") disposée dans la région de la structure de ceintures (56 ; 56') et comportant des câblés métalliques de renforcement (75) qui sont disposés en alignement en formant un angle entre 45 et 85 degrés par rapport au plan équatorial du bandage pneumatique ;
et au moins une couche de renforcement en tissu supportant les contraintes de traction déployée en direction circonférentielle (59 ; 59', 59"), disposée dans la région de la structure de nappes radiale (58 ; 58') et comportant des câblés en tissu (79) qui sont alignés en formant un angle entre 45 et 85 degrés par rapport au plan équatorial du bandage pneumatique.

2. Bandage pneumatique (50) selon la revendication 1, dans lequel la largeur de ladite ou desdites couches de renforcement de ceintures déployées en direction circonférentielle (66) et la largeur de ladite ou desdites couches de renforcement en tissu déployées en direction circonférentielle (59) sont approximativement égales à la largeur de la structure de ceintures (56).

3. Bandage pneumatique (50) selon la revendication 1, dans lequel ladite ou lesdites couches de renforcement de ceinture (66) comportent des câblés métalliques de renforcement (75) qui sont alignés en formant un angle d'environ 80 degrés par rapport au plan équatorial du bandage pneumatique.

4. Bandage pneumatique (50) selon la revendication 1, dans lequel la couche de renforcement en tissu (59) est déployée entre le calandrage intérieur (74) et la nappe radiale (77) disposée le plus à l'intérieur en direction radiale.

5. Bandage pneumatique (50) selon la revendication 1, dans lequel ladite ou lesdites couches de renforcement en tissu (59) comportent des câblés de renforcement (79) qui sont alignés en formant un angle d'environ 80 degrés par rapport au plan équatorial du bandage pneumatique.

6. Bandage pneumatique (50) selon la revendication 5, au moins une desdites nappes radiales (70, 72) de la structure de nappes radiale (58) est renforcée avec des câblés métalliques inextensibles.

7. Bandage pneumatique (50) selon la revendication 1, dans lequel la couche de renforcement en tissu (59) est construite à partir d'un tissu renforcé avec des câblés à module élevé constitués d'aramide, de rayonne ou de polyester.

8. Bandage pneumatique (50) selon la revendication 1, dans lequel la couche de renforcement de ceinture (66) est déployée à l'extérieur de la structure de ceintures (56) en direction radiale et à l'intérieur d'un recouvrement en tissu (53) en direction radiale.

9. Bandage pneumatique (50) selon la revendication 1, dans lequel la couche de renforcement de ceinture (66) est placée entre les ceintures (67, 68) de la structure de ceintures (56).

10. Bandage pneumatique (50) selon la revendication 1, dans lequel la couche de renforcement en tissu (59) est placée directement à l'extérieur de la structure de nappes radiale (58) en direction radiale et à l'intérieur de la structure de ceintures (56) en direction radiale, ladite structure comprenant deux ceintures (67, 68).
